Europäisches Patentamt

European Patent Office

Office européen des brevets

(19)

(11) Numéro de publication : **0 206 855 B1**

(12) # FASCICULE DE BREVET EUROPEEN

(45) Date de publication du fascicule du brevet :
23.01.91 Bulletin 91/04

(51) Int. Cl.⁵ : **G01F 1/44,** G01P 13/00,
E21B 7/06, E21B 10/34,
E21B 41/00

(21) Numéro de dépôt : 86401039.2

(22) Date de dépôt : **15.05.86**

(54) **Méthode et dispositif pour détecter un débit de fluide.**

(30) Priorité : **11.06.85 FR 8508936**

(43) Date de publication de la demande :
**30.12.86 Bulletin 86/52**

(45) Mention de la délivrance du brevet :
**23.01.91 Bulletin 91/04**

(84) Etats contractants désignés :
**DE GB IT NL**

(56) Documents cités :
**DE-A- 2 643 996**
**FR-A- 2 519 686**
**US-A- 1 635 040**
**US-A- 3 717 208**

(73) Titulaire : **INSTITUT FRANCAIS DU PETROLE**
**4, Avenue de Bois-Préau**
**F-92502 Rueil-Malmaison (FR)**

(72) Inventeur : **Bardin, Christian**
**25, rue Charles Duport**
**F-92270 Bois Colombes (FR)**
Inventeur : **Morin, Pierre**
**113, rue Danton**
**F-92300 Levallois-Perret (FR)**

EP 0 206 855 B1

Jouve, 18, rue Saint-Denis, 75001 PARIS

**Description**

La présente invention concerne un dispositif et une méthode pour détecter un débit notamment dans le cadre du forage pétrolier et plus particulièrement des opérations en cours de forage.

En effet, lors de telles opérations, il est souvent nécessaire de transmettre une ou plusieurs informations de la surface vers le fond du puits, notamment pour actionner ou arrêter un mécanisme. Les techniques classiques font appel à l'utilisation d'un câble électrique ou à l'envoi d'une bille depuis la surface. La première technique a l'inconvénient majeur d'avoir une application limitée au turboforage, car la rotation de la garniture comportant un câble est impossible ou tout au moins nécessite une adaptation coûteuse du train de tiges. L'utilisation d'une bille lâchée dans les tiges de forage interfère peu avec la mise en oeuvre du train de tiges, mais certains instruments de mesure en cours de forage, ainsi que les moteurs et turbines de fond, n'autorisent pas le passage de cette bille.

L'art antérieur peut être illustré par les documents suivants US-A 1.635.040, qui divulgue l'utilisation d'un venturi variable pour le mesure d'un débit), DE-A-2643 996 (qui divulgue l'utilisation d'un venturi variable commandé) et US-A-3717 208 (qui divulgue un accord coudé pour forages dirigés).Le document FR-A-2519686 divulgue aussi un raccord coudé à angle variable pour forages dirigés, qui a la plupart des caractéristiques structurelles de la revendication 1 de la présente demande, mais qui est télécommandé et ne réagit que quand le débit du fluide qui coule dans un passage surmonte un débit seuil. Le but de l'invention est de fournir un dispositif qui réagit quand le débit du fluide qui coule dans un passage surmonte un débit seuil et une méthode pour détecter celui-ci et pour commander une action à partir de celui-ci.

La présente invention comprend un dispositif comme défini dans les revendications 1 à 10.

Chacune des zones est sensiblement en équipression avec le passage au niveau de l'une des deux sections droites. Le passage pourra avoir la forme d'un venturi, c'est-à-dire qu'il pourra comporter un rétrécissement suivi d'un élargissement.

Le piston pourra avoir une course suffisante pour obstruer au moins partiellement lors de son déplacement le passage d'écoulement du fluide.

Le logement du piston pourra avoir une forme cylindrique et son axe pourra être sensiblement perpendiculaire à la direction de l'écoulement du fluide dans le passage.

L'une desdites zones, dont il a été question précédemment pourra être en communication avec la section de plus petite valeur.

Le dispositif selon l'invention pourra comporter plusieurs pistons, chacun de ces pistons comportant des moyens de rappel qui lui sont propres.

Le dispositif selon l'invention pourra comporter un système pour détecter le déplacement dudit piston.

Le dispositif selon l'invention pourra comporter un piston auxiliaire délimitant lui-même deux zones dont l'une est sensiblement en équipression avec une section du passage du fluide.

Le piston détecteur pourra avoir une course suffisamment importante pour que son déplacement provoque une augmentation de pression permettant le déplacement du piston auxiliaire.

Selon une variante de la présente invention, le piston auxiliaire pourra supporter le passage du fluide et le piston détecteur.

On ne sortira pas du cadre de la présente invention en équipant le dispositif d'un conduit mettant en communication l'une des zones délimitées par la piston auxiliaire avec l'une des zones délimitées par le piston détecteur et d'un autre conduit mettant sensiblement ces deux zones en équipression avec le passage du fluide au niveau d'une section droite située en amont dudit piston détecteur, en considérant le sens de l'écoulement.

La présente invention concerne également une méthode pour détecter au moins un débit seuil d'un fluide et pour commander une action à partir de ce débit selon la revendication 11.

L'invention est illustrée, à titre d'exemple seulement, par les dessins annexés où :
– les figures 1 et 2 représentent schématiquement un mode de réalisation simple du dispositif selon l'invention,
– la figure 3 donne la courbe caractéristique de l'évolution de la différence de pression dans un dispositif fixe en fonction du débit,
– la figure 4 illustre un autre mode de réalisation selon l'invention,
– la figure 5 donne la courbe d'évolution de pression à l'amont du système selon l'invention dans un cas donné, et
– les figures 6, 7, 8, 9, 10 et 11 montrent des améliorations du système selon l'invention ainsi que des cas d'application.

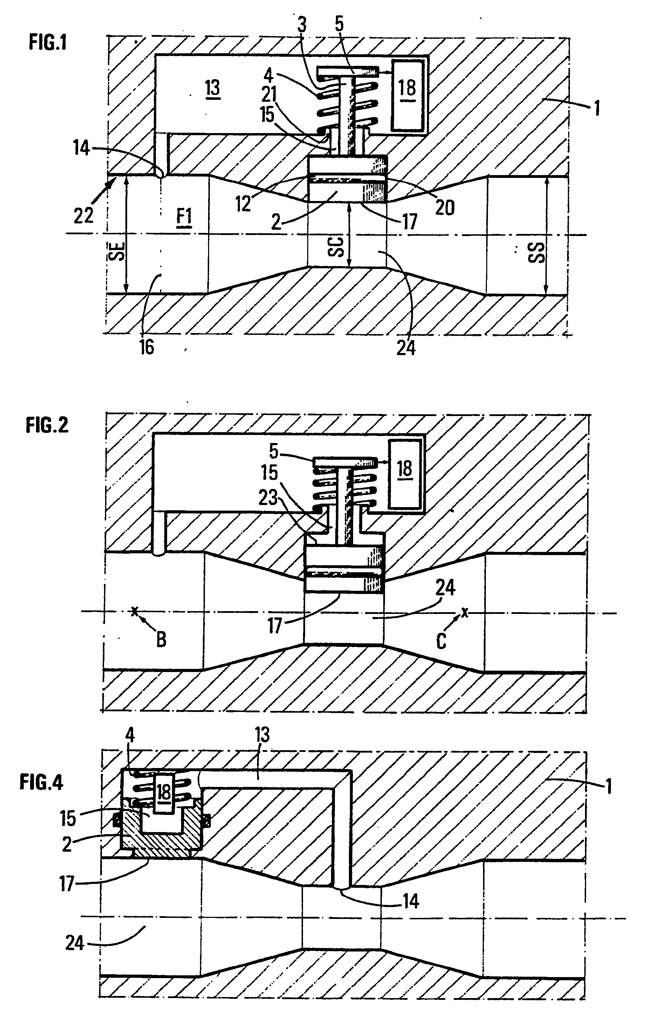

La figure 1 représente schématiquement un mode de réalisation du dispositif selon l'invention.

Ce dispositif comporte :

2

– un retrécissement suivi d'un élargissement de la section de passage du fluide ou venturi 1 dans lequel est aménagé au moins un alésage 20 usiné suivant un axe sensiblement perpendiculaire à la direction d'écoulement du fluide dans le venturi. Cet alésage débouche à un niveau du venturi où la section droite de passage du fluide SC se trouve inférieure à la section droite de passage du fluide à l'entrée SE, ou la sortie SS du venturi. Cette section SC sera de préférence la section de passage de fluide la plus faible du venturi, mais il peut en être autrement. Dans le cas de la figure 1, il existe une zone de section constante entre le rétrécissement et l'élargissement ;

– un piston 2 de préférence cylindrique qui coopère avec un alésage 20, ce piston 2 possède deux faces référencées 17 et 23 et délimite deux zones référencées 24 et 15 ;

– un système d'étanchéité 12 entre le piston 2 et l'alésage 20 tel un joint torique ;

– un système de rappel du piston dans son logement exerçant une force de rappel F s'opposant à la sortie du piston. Ce système de rappel comporte une tige 3 solidaire du piston 2, d'une rondelle 5 solidaire de la tige 3 et d'un ressort 4 positionné entre la rondelle 5 et un épaulement 21 solidaire du venturi 1. Le ressort 4, une fois en place, se trouve comprimé de façon à exercer sur le piston 2 une force F qui tend à maintenir ce dernier contre l'épaulement 21 ;

– éventuellement, un système 18 pour détecter le déplacement du piston. Ce système peut être mécanique tel un levier, électrique tel un contact, un interrupteur, hydraulique tel un distributeur, pneumatique, magnétique, électronique ou de tout autre type ;

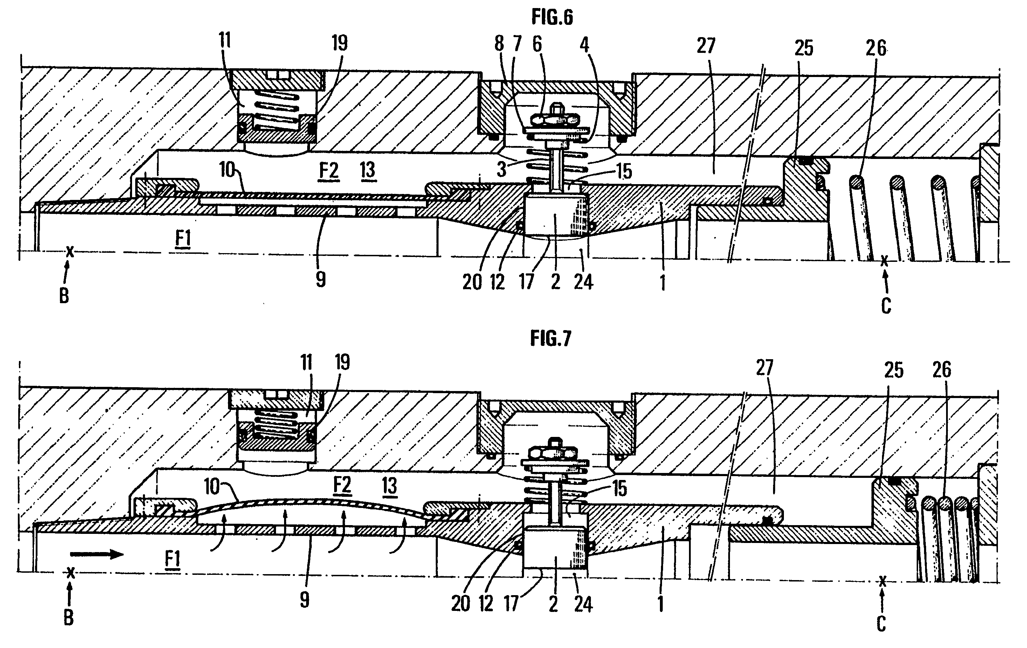

– une communication comportant un conduit 13 aménagé par exemple dans le corps du venturi, si celui-ci constitue une pièce massive débouchant dans le canal d'écoulement du fluide suivant une direction sensiblement perpendiculaire à la direction d'écoulement du fluide à un niveau où la section de passage du fluide se trouve supérieure à la section SC au droit du piston. Ce conduit 13 permet le transfert de la pression statique de l'écoulement de la section 16 vers la face "arrière 23" du piston 2. Dans le principe, le fluide agissant sur la face 23 du piston peut être identique à celui qui traverse le venturi. Cependant, pour des raisons de perennité et de fiabilité de l'installation, il peut être souhaitable d'utiliser des fluides différents. Un mode de réalisation de l'invention, tenant compte de ce point, sera présenté en se référant au schéma de la figure 6 plus loin.

Lorsqu'un fluide s'écoule dans le venturi 1, les pressions statiques dans les différentes sections du venturi prennent des valeurs différentes. Il est possible d'évaluer l'écart de pression entre deux sections S1 et S2 en utilisant le théorème de BERNOULLI appliqué à un fluide incompressible suivant :

$$P_{S1} + \frac{1}{2} RV^2_{S1} + Rgz_{S1} = P_{S2} + \frac{1}{2} RV^2_{S2} + Rgz_{S2} + DH_{12} \quad \text{I}$$

où $P_{S1}$ et $P_{S2}$ sont les valeurs des pressions statiques respectivement au niveau des sections S1 et S2,
$V_{S1}$ et $V_{S2}$ sont les valeurs des vitesses d'écoulement du fluide respectivement dans les sections S1 et S2,
$z_{S1}$ et $z_{S2}$ sont les valeurs des altitudes respectives des sections S1 et S2 par rapport à une référence fixe,
R est la valeur de la masse volumique du fluide,
g est l'accélération due aux forces de l'apesanteur,
$DH_{12}$ est la perte de charge de l'écoulement entre les sections S1 et S2.

Par souci de simplification, en vue de clarifier cet exposé, on peut considérer que le terme $(Rg(z_{S1} - z_{S2}))$ est faible devant le terme $\frac{1}{2} R (V^2_{S1} - V^2_{S2})$ et le terme $DH_{12}$ faible devant le terme $(P_{S1} - P_{S2})$

Ceci sera plus particulièrement justifié si le conduit 13 débouche dans une section se trouvant à l'amont de la section rétrécie du venturi car un convergent crée peu de perte de charge.

L'équation de BERNOULLI (1) devient alors

$$P_{S2} - P_{S1} = \frac{1}{2} R(V^2_{S1} - V^2_{S2}) \quad \text{II}$$

Si Q est le débit volumique du fluide, l'équation II peut s'écrire

$$P_{S2} - P_{S1} = \frac{1}{2} R(\frac{1}{s_1^2} - \frac{1}{s_2^2}) \, Q^2 \qquad\qquad III$$

S1, S2 étant des constantes pour un équipement donné III peut s'écrire

$$P_{S2} - P_{S1} = ARQ^2 \qquad\qquad IV$$

$$\text{où } A = \frac{1}{2} (\frac{1}{s_1^2} - \frac{1}{s_2^2}) \qquad \text{est une constante}$$

Il ressort de l'équation IV que, pour un fluide donné, donc pour une masse volumique fixée, la différence de pression $P_{S2} - P_{S1}$ ne varie qu'en fonction du carré du débit Q.

Quand le débit atteint une certaine valeur, appelée débit d'activation Qact., la différence de pression $DP = P_{S2} - P_{S1}$ s'exerçant sur la section s du piston 2 crée une force f = DP × s suffisante pour vaincre la force de rappel F augmentée de la force de frottement dûe au système d'étanchéité 12.

A ce moment là, le piston va sortir de son logement jusqu'à ce qu'un nouvel équilibre de force soit trouvé, soit par augmentation de la force de rappel, soit par action d'une butée mécanique au niveau des pièces en mouvement (piston, tige, rondelle...).

Ce nouvel équilibre est représenté sur le schéma de la figure 2. Lors du déplacement du piston, le système 18 détecte cette information qui est la représentation directe du produit de la masse volumique du fluide R par le carré du débit Q : $RQ^2$.

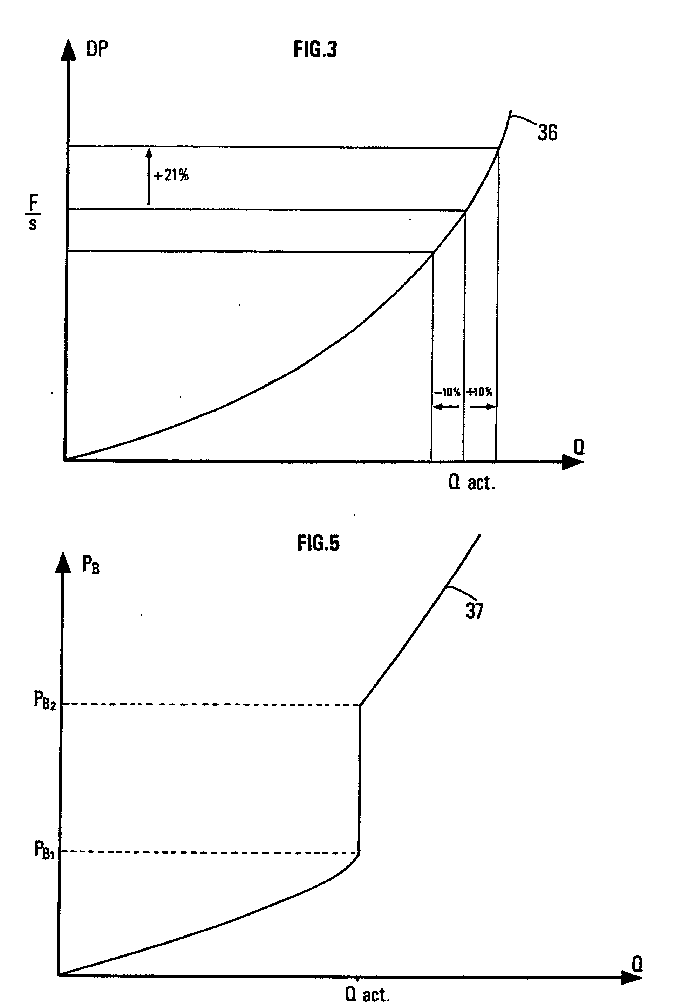

La courbe 36 de la figure 3 donne l'évolution de la différence de pression DP en fonction du débit Q pour un fluide donné (donc R constant). Quand le débit atteint la valeur de débit d'activation Qact, la différence de pression DP est égale à la force de rappel F divisée par la section s du piston 2. La courbe 36 de la figure 3 fait apparaître un aspect bien connu du système venturi qui est sa grande précision pour réaliser un détecteur de débit. En effet, la différence de pression DP variant en fonction du carré du débit, une faible variation de ce dernier crée une variation sensible de la différence de pression DP. Par exemple une variation de 10% du débit créera une variation voisine de 20% de la différence de pression DP et une variation de 20% du débit créera une variation voisine de 44% de la différence de pression DP.

Le système selon l'invention allie donc à la précision du système venturi, la robustesse, la fiabilité et le coût modéré d'un système mécanique particulièrement bien adapté aux milieux hostiles où règnent forte pression, une forte température, etc...

Le système selon l'invention offre une grande possiblité de réglage du seuil de débit auquel on souhaite avoir le déplacement du piston. En effet, pour un fluide donné, le débit d'activation va dépendre de la section de passage du fluide au droit du piston, de la section de passage du fluide au niveau où le piquage ou orifice 14 de l'extrémité du conduit 13 aboutit, de la section du piston s et de la force de rappel F.

Ces trois sections sont des données de fabrication et sont donc inchangeables une fois le système réalisé. Par contre, la force de rappel F peut éventuellement être modifiée (changement de ressort par exemple ou modification de sa compression initiale...), ce qui apporte une souplesse de réglage intéressante au système selon l'invention.

Le système selon l'invention peut disposer de plusieurs pistons de section s identiques ou différentes. La section de ces pistons ainsi que les caractéristiques mécaniques des moyens de rappels sont déterminés pour détecter des débits identiques ou différents. Cela peut permettre de détecter des plages de débit et de savoir, par exemple, que le débit passant à un instant donné dans le système selon l'invention est compris entre deux débits seuils $Q_1$ et $Q_2$, au-dessous ou au-dessus de ces débits-seuils, selon que le piston devant détecter le débit $Q_1$ s'est déplacé et le piston devant détecter le débit $Q_2$ ne s'est pas déplacé, que les deux pistons se sont déplacés ou ne se sont pas déplacés.

Le système selon l'invention peut servir également de détecteur de masse volumique étant placé dans un conduit où le débit de fluide sera maintenu constant.

Il sera possible alors de régler les moyens de rappel de manière que le déplacement du piston se produise pour une valeur de masse volumique donnée R.

Le système selon l'invention sera moins précis en utilisation de détection de masse volumique qu'en détection de débit, car la différence de pression dépend de la masse volumique élevée à la puissance 1 seulement.

Une variante du systéme selon l'invention consiste, comme représenté sur la figure 4, à positionner le piston 2 au niveau d'une section de passage du fluide plus grande que la section au niveau de laquelle est réalisé le piquage 14 de pression venant agir via la communication 13 derrière le piston 2.

Dans ce cas, le mouvement du piston 2 et l'action du ressort 4 seront inversés par rapport au système de la figure 1.

Il sera toujours possible d'adapter un système de détection 18 captant le déplacement du piston 2.

Le schéma de la figure 2 montre le piston 2 dans une position où il est sorti de son logement et où il obstrue une partie de la section de passage du fluide. Il est possible de faire en sorte que le piston ne vienne pas obstruer, même partiellement, la section droite de passage du fluide en le positionnant au départ en retrait dans son logement (ou en utilisant la variante de la figure 4).

Cependant, la possibilité d'obstruction partielle du canal d'écoulement du fluide présente un grand intérêt du système selon l'invention.

En effet, il permet de combiner en un seul ensemble un détecteur d'information, en l'occurence ici, un détecteur de seuil de débit, et un système capable de mettre à disposition une certaine puissance motrice pour manoeuvrer un équipement, tel un piston par exemple.

En effet, quand le ou les pistons 2 viennent obstruer le passage ou canal d'écoulement 22 du fluide F1, ils créent entre la partie amont et la partie aval du venturi une perte de charge DT qui correspond à une dégradation de l'énergie totale du fluide sous forme de chaleur.

En considérant deux points B et C situés respectivement à l'amont et à l'aval du système selon l'invention (Fig. 2), la dégradation d'énergie se traduira par une différence de pression dP dont une valeur approximative est fournie par l'équation V ci-après :

$$dP = \frac{1}{2} R(V_1 - V_2)^2 = P_B - P_C \quad \text{IV}$$

où

R est la masse volumique du fluide,

$V_1$ la vitesse d'écoulement du fluide dans la section obstruée,

$V_2$ la vitesse d'écoulement du fluide en C.

$P_B$ la pression totale en B, et

$P_C$ la pression totale en C.

Cette différence de pression pourra être mesurée et comparée à la valeur calculée si la section de passage du fluide en B et C sont identiques. Si les sections de passage du fluide en B et C sont différentes, la mesure de pression reflétera simultanément la perte de charge créée et la variation d'énergie cinétique $\frac{1}{2} RV^2$ entre les points B et C.

La courbe 37 de la figure 5 montre l'évolution de la pression à l'amont du système selon l'invention dans le cas de l'obstruction partielle de l'écoulement par un piston 2.

Quand le débit reste inférieur au débit d'activation Qact, la pression varie en fonction du carré du débit. Lorsque le débit d'activation est atteint, la sortie du piston 2 crée une augmentation subite de la pression en B représentée sur la courbe 37 par le segment PB1 – PB2. Pour des débits supérieurs, la pression en B varie de nouveau en fonction du carré du débit Q.

La brusque variation de pression PB2 – PB1 lors de la sortie du piston 2 permet, à l'aide d'une mesure de pression, de contrôler à distance le bon fonctionnement du dispositif selon l'invention.

La variante représentée à la figure 6 permet d'utiliser la surpression créée par la sortie du ou des pistons dans le fluide F1 en amont de ce piston 2 pour mouvoir un organe. De plus, la variante représentée sur la figure 6 peut être utilisée avec un fluide F1 transportant des impuretés puisque il y a une séparation du fluide F1 et du fluide servant à mouvoir ledit organe comme cela sera expliqué plus loin.

Le système représenté sur cette figure 6 ne comporte pas de système de détection 18 associée au déplacement du piston mais cette possibilité n'est pas exclue. Dans la variante représentée, il existe une possibilité de réglage du seuil de détection par le réglage de la valeur initiale de la force de rappel F par l'intermédiaire de l'écrou 6 et de la rondelle 7. Cet écrou est accessible grâce à l'ouverture 8.

La communication 13 remplie par un fluide F2, qui pourra être de l'huile hydraulique par exemple, joue le rôle de réservoir pour ce fluide F2 servant à manoeuvrer un mécanisme ou un organe annexe lors de la sortie du piston 2. Il serait possible d'utiliser différentes communications 13 indépendantes pour manoeuvrer différents mécanismes.

La communication 13 sera donc en relation avec une partie du canal d'écoulement 22 du fluide située à l'amont du venturi. La séparation physique entre les fluides F1 et F2 se fera par l'intermédiaire d'une membrane souple 10 qui pourra elle-même être protégée des effets d'érosion du fluide F1 par une pièce 9, métallique ou non, qui est perforée pour autoriser le transfert de la pression du fluide F1 au fluide F2.

La pièce 9 évitera également la déformation de la membrane 10 vers l'intérieur du canal d'écoulement 22 de fluide, ce qui provoquerait une obstruction inopinée de ce canal. Bien entendu, cette membrane peut être remplacée par un autre organe, notamment par un piston.

Dans le circuit du fluide F2, il pourra se trouver une chambre de compensation 11, dont le but essentiel sera de compenser la dilatation du fluide F2 sous l'effet de la chaleur et d'éviter ainsi une augmentation inopinée de la pression du fluide F2 qui modifierait le fonctionnement du système.

La figure 7 montre le fonctionnement du système amélioré selon l'invention lorsque le débit traversant le venturi 1 est supérieur ou égal au débit d'activation préréglé. Sous l'effet de la différence de pression, le piston 2 sort de son logement et obstrue partiellement le canal d'écoulement du fluide. Le déplacement du piston nécessite le transfert d'un certain volume V de fluide F2 de la chambre 13 vers l'espace ou zone 15 délimité par la face 23 du piston et l'alésage 20.

Ce transfert est possible grâce à la déformation de la membrane 10 qui permet de garder le volume total de fluide F2 constant et au transfert du même volume V de fluide F1 au travers de la pièce 9.

Dans les figures 6 et 7, le fluide F2 sert à déplacer un piston auxiliaire 25 qui est annulaire et comprime un ressort 26.

Le fonctionnement de ce système est le suivant :

Lorsque le débit de fluide atteint un débit-seuil appelé débit d'activation, le piston 2 vient obstruer partiellement le canal d'écoulement 22 du fluide F1 et crée entre les points B et C une perte de charge qui se traduira par une différence de pression sensible entre B et C : $P_B - P_C$ 0.

En dimensionnant le système de telle sorte que la différence de pression $P_B - P_C$ multipliée par la section active du piston auxiliaire 25, SP représente une force supérieure à celle du ressort 26 alors le fluide F2 sous pression venant de la chambre 13 et passant par le conduit 27 pourra déplacer le piston 25 et comprimer le ressort 26, ceci est le cas de la figure 7.

Le volume de fluide F2 nécessaire au déplacement du piston 25 sera donc pris comme le montre la figure 7 sur le volume initial de la chambre 13 grâce à la déformation de la membrane 10 et au transfert d'un volume équivalent de fluide F1 à travers la pièce 9. Il est à noter que le système fonctionnerait également si les fluides F1 et F2 étaient identiques et donc sans la membrane 10, la pièce 9 ainsi qu'en l'absence de la chambre de compensation 11.

Le déplacement du piston 25 créant la compression du ressort 26 peut être considéré comme un stockage d'une certaine quantité d'énergie utilisable ultérieurement.

Le retour à la position initiale du système représenté à la figure 6, se fait par abaissement du débit du fluide F1 jusqu'à ce que la pression en B chute suffisamment pour autoriser le retour du piston 2 et/ou du piston 25. Il est à noter que les retours des pistons 2 et 25 peuvent être ou non synchronisés.

L'utilisation du système selon l'invention pour déplacer un piston à partir d'un débit donné peut être envisagée en intégrant le système de détection de débit et de dégradation d'énergie au piston auxiliaire mobile et en utilisant par exemple le fluide F1 directement comme fluide moteur du piston.

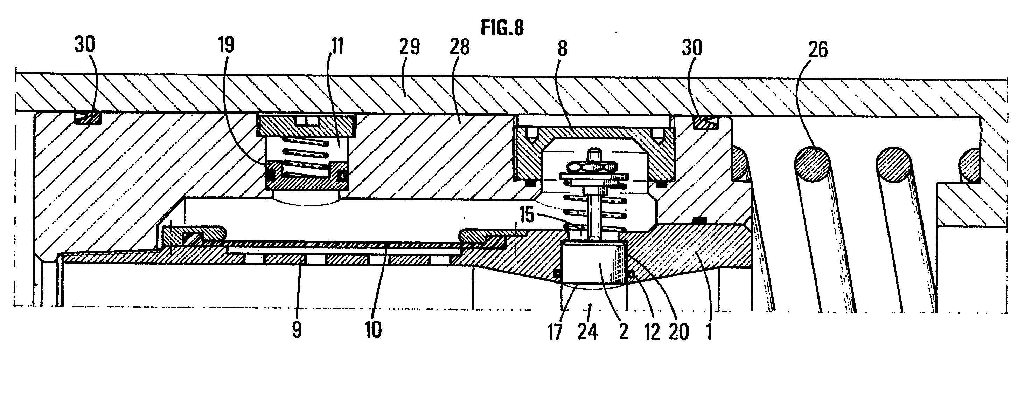

Une représentation schématique d'un tel système est donnée à la figure 8. La référence 28 représente le piston auxiliaire mobile et 29 le corps extérieur du système. Le ressort 26 s'oppose au déplacement du piston 28. Des joints à lèvres 30 pourront être utilisés pour réaliser une étanchéité entre le piston auxiliaire mobile et le corps extérieur 29.

Bien entendu, on ne sortira pas du cadre de la présente invention en supprimant la membrane 10, la grille 9 et la chambre de compensation 11 du dispositif représenté à la figure 8. Le fonctionnement de ce mode de réalisation est indiqué ci-après.

A partir d'un certain débit appelé débit d'activation, le piston 2 sort de son logement et provoque une chute de pression qui entraîne le déplacement du piston auxiliaire 28 et comprime le ressort 26.

Bien entendu, dans le mode de réalisation de la figure 8, le piston auxiliaire entraîne dans sa course le piston 2, ce qui n'est pas le cas du mode de réalisation représenté aux figures 6 et 7.

De plus, dans le mode de réalisation de la figure 8, le volume déplacé par la déformation de la membrane 10 correspond uniquement au volume libéré par le déplacement du piston 2 et éventuellement du piston 19 de la chambre de compensation 11.

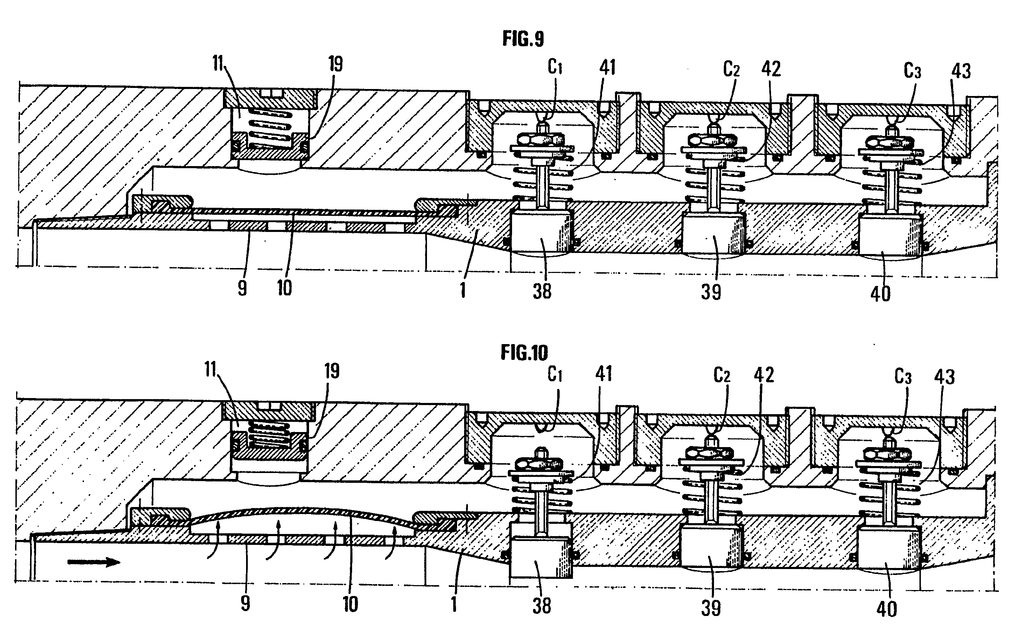

La figure 9 montre une réalisation possible du système selon l'invention avec plusieurs pistons "réagissant" à des débits différents. Dans notre cas particulier, il y a trois pistons 38, 39, 40 de section identique placés à des niveaux où les sections de passage de fluide dans le canal d'écoulement sont identiques. Des ressorts 41, 42, 43 respectivement associés à chacun desdits pistons créent une force de rappel sur les pistons différente les unes des autres, si bien qu'ils vont réagir à des débits d'activation Q1act, Q2act, Q3act différents. On peut imaginer qu'un contact respectivement C1, C2, C3 soit associé à chaque piston et qu'il informe un circuit électronique auxiliaire du déplacement du piston correspondant.

Supposons que Q1act < Q2act < Q3act.

Supposons que le débit Q traversant le système soit tel que Q1act < Q < Q2act.

Le système évoluera donc de l'état représenté à la figure 9 à celui représenté à la figure 10. Le piston 38 se déplacera, ce qui aura pour effet d'ouvrir le contact C1. Les pistons P2 et P3 ne s'étant pas déplacés, les contacts C2 et C3 resteront fermés. Ces trois informations pourront être pris en compte par un circuit électrique ou électronique annexe non représenté.

Un système à deux pistons 38 et 39 réagissant respectivement aux débits Q1act et Q2act et associés respectivement à un contact C1 et C2 pourra servir à la mise en route et à l'arrêt par exemple d'un système de fond d'enregistrement de données. On supposera pour la suite de l'exposé que Q1act soit inférieur à Q2act.

Il est facile de réaliser un circuit électronique commandant la mise en marche de l'enregistrement quand C1 est ouvert et commandant l'arrêt de l'enregistrement quand C2 est ouvert. Il sera alors aisé de commander les périodes d'enregistrement par le réglage de débit.

Le système selon l'invention pourra également s'appliquer, par exemple, à la commande d'un raccord coudé à angle variable pour forages dirigés tel que décrit dans les brevets français 78/22.063, 79/08.803, 79/08.804, 80/21.890, 82/00.652.

En effet, le fonctionnement du raccord coudé à angle variable pour forages dirigés nécessite la prise en compte d'une information et la création d'une surpression momentanée dans une partie du raccord pour déplacer un piston.

Le déplacement du piston auxiliaire créé du fait de la coopération, de doigts et de rainures, la rotation de la partie inférieure du raccord coudé par rapport à la partie supérieure, rotation qui se traduit, du fait de la conception du raccord coudé à angle variable, par la création d'un angle entre les axes des deux parties sus-nommées.

L'application du système selon l'invention ne se limite pas au seul cas du raccord coudé à angle variable, mais présente un intérêt dans de nombreuses applications, particulièrement dans les équipements se trouvant dans des conduits peu accessibles où circule un fluide incompressible et dans le cas où un transfert d'information vers cet équipement est nécessaire et/ou dans le cas où une certaine énergie est nécessaire pour manoeuvrer un mécanisme.

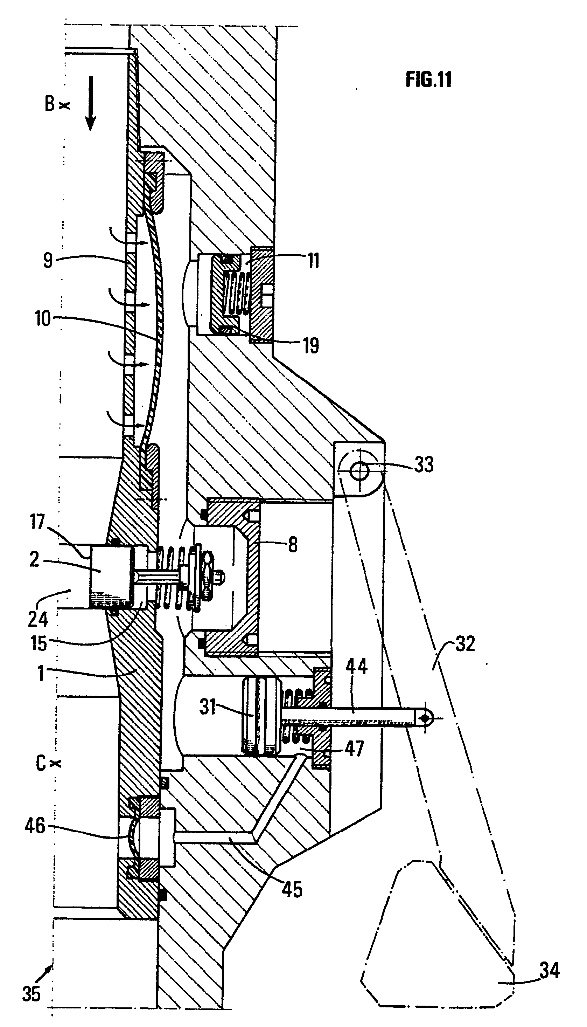

Il pourrait être utilisé par exemple pour commander l'écartement des bras d'élargisseur utilisé en forage pour augmenter le diamètre du puits. La figure 11 montre une application possible du système selon l'invention pour écarter les bras 32 d'un élargisseur de puits. Quand le débit est supérieur au débit d'activation, le piston 2 obstrue partiellement le canal d'écoulement du fluide, ce qui crée entre les points B et C une différence de pression DP suffisante pour déplacer un piston 31 relié par l'intermédiaire d'une tige 44 au bras 32 de l'élargisseur, ce qui entraine la rotation du bras de l'élargisseur 32 autour de l'axe 33.

Ce mouvement a pour conséquence d'éloigner une mollette 34 de l'axe 35 du puits. La rotation de cet ensemble permet d'augmenter le diamètre du puits. Dans cette configuration, le bras de l'élargisseur reste en position tant que le débit de fluide reste assez élevé. Il est envisageable d'adjoindre à ce système un verrouillage mécanique ou hydraulique de la position du piston 31 ou du bras 32. Il est alors possible de commander l'effacement de ce système de verrouillage par un système de détection de débit selon l'invention, ce système réagissant à un débit supérieur au débit d'activation initial commandant l'écartement des bras. Le conduit 45 et la membrane 46 permettent le transfert et le stockage du fluide se trouvant chassé par le déplacement du piston 31.

## Revendications

1. Dispositif qui réagit quand le débit de fluide qui coule dans un passage (22) surmonte un débit seuil, comprenant un corps dans lequel est aménagé un passage (22) pour ledit fluide (F1), ledit passage comportant au moins deux sections droites (SE, SC) de valeurs différentes, au moins un piston (2) ayant deux faces (23, 17) monté dans le logement (20) aménagé dans la paroi, ledit piston définissant avec ledit logement deux zones (15, 24) réparties de part et d'autre des deux faces dudit piston, des moyens de rappel (4) dudit piston dans une première position ou position de repos, chacune desdites zones (15, 24) étant sensiblement en équipression avec ledit passage au niveau de l'une des deux sections droites, l'une des deux faces (17) étant en communication directe et continue avec l'une desdites sections (SC) et l'autre face (23) étant en

7

communication continue avec l'autre desdites sections (SE) par le moyen d'un conduit (13) qui est ouverte sur cette autre section ou qui est reliée à celle-ci par une membrane souple (10), pour transmettre continuellement la pression existante dans cette autre section à ladite autre face (23), ledit dispositif réagissant par le déplacement du piston dans le logement.

2. Dispositif selon la revendication 1, caractérisé en ce que ledit passage (22) a la forme d'un venturi (1), c'est-à-dire qu'il comporte un rétrécissement suivi d'un élargissement et en ce que l'une desdites zones (15, 25) est en communication avec la section de plus petite valeur.

3. Dispositif selon l'une des revendications 1 ou 2, caractérisé en ce que ledit piston (2) a une course suffisante pour obstruer au moins partiellement lors de son déplacement, le passage (22) d'écoulement du fluide.

4. Dispositif selon l'une des revendications 1 à 3 selon lequel ledit logement (20) du piston (2) a une forme cylindrique, caractérisé en ce que l'axe dudit logement (20) est sensiblement perpendiculaire à la direction de l'écoulement du fluide dans ledit passage (22).

5. Dispositif selon la revendication 1, caractérisé en ce qu'il comporte plusieurs pistons (38, 39, 40), chacun desdits pistons comportant des moyens de rappel (41, 42, 43) qui lui sont propres.

6. Dispositif selon la revendication 1, caractérisé en ce qu'il comporte un système (18) pour détecter le déplacement dudit piston (2).

7. Dispositif selon l'une des revendications 1 à 6, caractérisé en ce qu'il comporte un piston auxiliaire (25) délimitant, lui-même, deux zones dont l'une est sensiblement en équipression avec une section dudit passage (22).

8. Dispositif selon la revendication 7, caractérisé en ce que ledit piston (2) a une course suffisamment importante pour que son déplacement crée une augmentation de pression permettant le déplacement du piston auxiliaire (25).

9. Dispositif selon la revendication 7, caractérisé en ce que ledit piston auxiliaire (28) supporte ledit passage (22) et ledit piston (2).

10. Dispositif selon la revendication 7, caractérisé en ce qu'il comporte un conduit (27) mettant en communication l'une des zones délimitées par le piston auxiliaire (25) avec l'une des zones délimitées par le piston (2) et un autre conduit (13) mettant sensiblement ces deux zones en équipression avec ledit passage (22) au niveau d'une section droite situé en amont dudit piston (2) en considérant le sens de l'écoulement.

11. Méthode pour détecter au moins un débit-seuil d'un fluide et pour commander une action à partir de ce débit, en ce que l'on fait passer ledit fluide au travers d'un appareil dans un passage ayant au moins deux sections droites différentes, en ce qu'à partir d'un débit-seuil la force du fluide cause l'obstruction au moins partielle dudit passage en provoquant une perte de charge dudit fluide et en ce que la différence de pression existant de part et d'autre de ladite obstruction cause un changement d'une autre partie de l'appareil et commande une action.

## Ansprüche

1. Vorrichtung, die reagiert, wenn der Durchsatz von in einem Durchlaß strömenden Fluid einen Schwellenwertdurchsatz überschreitet, mit einem Gehäuse, in welchem ein Durchlaß (22) für dieses Fluid (F1) ausgebildet ist, wobei dieser Durchlaß wenigstens zwei Querschnitte (SE, SC) unterschiedlicher Werte umfaßt, wenigstens ein Kolben (2) mit zwei Flächen (23, 17) in einer in der Wandung ausgebildeten Lagerung (20) montiert ist, wobei der Kolben mit diesem Lager zwei Zonen (15, 24) bildet, die zu beiden Seiten der beiden Flächen dieses Kolbens verteilt sind, Rückstelleinrichtungen (4) für diesen Kolben in eine erste Stellung oder Ruhestellung, wobei jede der Zonen (15, 24) im wesentlichen unter gleichem Druck mit dem Durchlaß in Höhe eines der Querschnitte steht, wobei eine der beiden Flächen (17) in direkter und kontinuierlicher Verbindung mit einem dieser Querschnitte (SC) und die andere Fläche (23) in kontinuierlicher Verbindung mit dem anderen dieser Querschnitte (SE) vermittels einer Leitung (13) steht, die gegen diesen anderen Querschnitt offen ist oder die mit diesem über eine nachgiebige Membran (10) verbunden ist, um kontinuierlich den in diesem anderen Querschnitt existierenden Druck auf diese andere Fläche (23) zu übertragen, wobei diese Vorrichtung durch Verschiebung bzw. Bewegung des Kolbens im Lager reagiert.

2. Vorrichtung nach Anspruch 1, dadurch gekennzeichnet, daß dieser Durchlaß (22) die Form eines Venturi-Rohres (1) hat, d.h., daß er eine Einschnürung gefolgt von einer Erweiterung umfaßt und daß eine dieser Zonen (15, 25) in Verbindung mit dem Querschnitt geringeren Wertes steht.

3. Vorrichtung nach Anspruch 1 oder 2, dadurch gekennzeichnet, daß dieser Kolben (2) einen ausreichenden Hub hat, um wenigstens teilweise bei seiner Bewegung den Fluidströmungsdurchlaß (22) zu ver-

EP 0 206 855 B1

legen.

4. Vorrichtung nach einem der Ansprüche 1 bis 3, wobei dieses Lager (20) des Kolbens (2) eine zylindrische Form hat, dadurch gekennzeichnet, daß die Achse dieses Lagers (20) im wesentlichen senkrecht zur Strömungsrichtung des Fluids in diesem Durchlaß (22) ist.

5. Vorrichtung nach Anspruch 1, dadurch gekennzeichnet, daß sie mehrere Kolben (38, 39, 40) umfaßt, wobei jeder dieser Kolben ihm eigene Rückstellmittel (41, 42, 43) umfaßt.

6. Vorrichtung nach Anspruch 1, dadurch gekennzeichnet, daß sie ein System (18) zur Ermittlung der Bewegung oder Verschiebung dieses Kolbens (2) umfaßt.

7. Vorrichtung nach einem der Ansprüche 1 bis 6, dadurch gekennzeichnet, daß sie einen Hilfskolben (25) umfaßt, der selbst zwei Zonen begrenzt, von denen die eine im wesentlichen unter Gleichdruck mit einem Querschnitt dieses Durchlasses (22) steht.

8. Vorrichtung nach Anspruch 7, dadurch gekennzeichnet, daß der Kolben (2) einen ausreichend großen Hub hat, damit seine Bewegung oder Verschiebung eine Druckerhöhung erzeugt, die die Bewegung oder Verschiebung des Hilfskolbens (25) erlaubt.

9. Vorrichtung nach Anspruch 7, dadurch gekennzeichnet, daß dieser Hilfskolben (28) den Durchlaß (22) und diesen Kolben (2) trägt.

10. Vorrichtung nach Anspruch 7, dadurch gekennzeichnet, daß sie eine Leitung (27) umfaßt, die eine der durch den Hilfskolben (25) begrenzten Zonen mit einer der durch den Kolben (2) begrenzten Zonen verbindet und eine andere Leitung (13) im wesentlichen diese Zonen unter gleichen Druck mit dem Durchlaß (22) in Höhe eines Querschnittes setzt, der sich in Strömungsrichtung vor diesem Kolben (2) befindet.

11. Verfahren zur Ermittlung wenigstens eines Durchsatzschwellenwertes eines Fluids und zur Steuerung einer Wirkung ausgehend von diesem Durchsatz, wobei man dieses Fluid durch eine Vorrichtung innerhalb eines Durchlasses führt, der wenigstens zwei unterschiedliche Querschnitte hat, daß ausgehend von einem Durchsatzschwellenwert die Kraft des Fluids das wenigstens teilweise Verlegen dieses Durchlasses hervorruft, indem ein Druckverlust dieses Fluids hervorgerufen wird und daß die zu beiden Seiten dieser Verlegung existierende Druckdifferenz eine Veränderung eines anderen Teils des Gerätes hervorruft und eine Wirkung steuert.


## Claims

1. Device which reacts when the flow of fluid passing through a bore (22) exceeds a flow threshold value, comprising a body in which is provided abore (22) for the said fluid (F1), the said bore comprising at least two cross sectional areas (SE, SC) with different values, at least one piston (2) having two faces (23, 17) and mounted in a recess (20) provided in the wall, the said piston defining, together with the said recess, two zones (15, 24) located on each side of the two faces of the said piston, a return device (4) for the said piston in a first position or position of rest, the pressure on each of the said zones (15, 24) being basically equivalent to that in the said bore in the area of one of the two cross sections, one of the two faces (17) being in direct and continuous communication with one of the said sections (SC) and the other face (23) being in continious communication with the other of the said sections (SE) by means of a passageway (13) which opens into the said other section or is connected to it by a flexible diaphragm (10) in order to continually transmit the pressure existing in this other section to the said other face (23), the said device reacting by the piston moving in its reress.

2. Device in accordance with claim 1, characterised in that the said bore (22) has the from of a venturi (1), that is, it includes a constriction followed by an enlargement and in that one of the said zones (15, 25) is in communication with the section of least value.

3. Device in accordance with one of claims 1 or 2, characterised in that the said piston (2) has sufficient travel to obstruct, a least partially during its movement, the bore (22) through which the fluid flows.

4. Device in accordance with one of claims 1 to 3 in which the said recess (20) for the piston (2) is of cylindrical form, characterised in that the axis of the said recess (20) is basically perpendicular to the direction of flow of the fluid in the said bore (22).

5. Device in accordance with claim 1, characterised in that it includes several pistons (38, 39, 40), each of the said pistons including its own return device (41, 42, 43).

6. Device in accordance with claim 1, characterised in that it includes a system (18) to detect the movement of the said piston (2).

7. Device in accordance with one of claims 1 to 6, characterised in that it includes an auxiliary piston (25) which itself defines two zones, one being basically subject to the same pressure as a section of the said bore (22).

8. Device in accordance with claim 7, characterised in that the said piston (2) has sufficient travel so that its movement creates an increase in pressure to permit the movement of the auxiliary piston (25).

9. Device in accordance with claim 7, characterised in that the said auxiliary piston (28) controls the said bore (22) and the said piston (2).

10. Device in accordance with claim 7, characterised in that it includes a passageway (27) which provides a communication between one of the zones defined by the auxiliary piston (25) and one of the zones defined by the piston (2) and another passageway (13), these two zones being basically subject to the same pressure as the said bore (22) in the aera of a cross section located upstream of the said piston (2), taking into consideration the direction of flow.

11. Method for detecting at least one threshold flow value for a fluid and to control an action using this flow value, in that the said fluid passes through a device located in a bore which has at least two different cross sections and in that, from a threshold flow value, the force of the fluid results in at least a partial obstruction of the said bore by inducing a pressure drop in the said fluid and in that the difference in pressure existing on each side of the said obstruction causes a change to occur in another part of the device and controls an action.

**FIG.1**

**FIG.2**

**FIG.4**

FIG.3

FIG.5

## FIG.6

## FIG.7

**FIG.8**

EP 0 206 855 B1

## FIG.9

## FIG.10

EP 0 206 855 B1

**FIG.11**